# EUROPEAN PATENT APPLICATION

(11) **EP 4 394 950 A1**
(43) Date of publication of application: **03.07.2024**
(21) Application number: 22861479.8
(22) Date of filing: 26.08.2022
(51) Int. Cl.: H01M 4/62, H01B 1/04, H01B 1/24, H01B 13/00, H01G 11/38, H01G 11/86, H01M 4/04, H01M 4/139

(54) **METHOD FOR PROVIDING CONDUCTIVE MATERIAL COMPOSITE PARTICLES AND**

(30) Priority: 27.08.2021 JP 2021139465
(71) Applicant: Mikuni Shikiso Kabushiki Kaisha, Himeji-shi Hyogo 671-0234 (JP)
(72) Inventor: HAYASHI, Yuichirou, Himeji-shi Hyogo 671-0234 (JP)
(74) Representative: Wächtershäuser & Hartz Patentanwaltspartnerschaft mbB
(86) International application number: PCT/JP2022/032301
(87) International publication number: WO 2023/027191

(57) **Abstract**

To provide a novel conductive material and manufacturing method thereof, which is in dry powder form effective in reducing environmental impact and improving long-term stability, and has high dispersibility and uniformity in an electrode coating that improves battery performance. [Resolution Means] Conductive material composite particles containing at least a conductive material and a dispersant, characterized by: the particle size distribution D50 being 20 µm or more and the sieved particle size being 150 µm or less; the DBP oil absorption of the conductive material being 550 ml/100 g or less; and including the dispersant at 1 to 10 parts by weight to 100 parts by weight of the conductive material

## Description

### Technical field

The present invention relates to a method for manufacturing conductive material composite particles that have high dispersibility when mixed with an electrode active material or a binder (binder) and high uniformity in an electrode coating, do not include coarse particles or foreign matter that can cause short-circuiting during operation, have a dispersion medium such as water or an organic solvent removed, and can be suitably used for an electricity storage device such as a battery or a capacitor.

### Background Art

In current lithium ion rechargeable batteries, positive and negative electrodes, which are formed by coating an electrode active material onto a strip-shaped metal foil, are used, and these are wound together with a separator and then housed in a battery can.

Of these, a lithium transition metal composite oxide or the like is used as the electrode active material for the positive electrode. Since these electrode active materials used alone in the positive electrode have poor electron conductivity, that is, poor conductivity, a carbon material such as conductive carbon black having a highly developed structure for imparting conductivity or graphite in which crystals demonstrate remarkable anisotropy is added as a conductive material, and dispersed in a nonaqueous solvent such as N-methyl-2-pyrrolidone together with a binder to produce an electrode paste. This electrode paste is coated and dried on a metal foil to form an electrode coating, and the positive electrode is produced.

In the negative electrode, in addition to a material having low conductivity such as silicon, a carbon-based material such as graphite is mainly used as the electrode active material. Although the carbon-based material has conductivity, there are cases where an electron conduction path cannot be sufficiently formed using the material alone due to gaps arising between the active materials depending on the size, and therefore, using a conductive material similarly to the positive electrode to improve conductivity is effective.

In this manner, the conductive material plays an important role in lithium ion rechargeable batteries, and in order to improve battery performance such as high charge and discharge capacity and long-term stability of charge and discharge ability, a conductive material having high dispersibility and uniformity that can easily be dispersed and thoroughly impart conductivity to the periphery of the active material is required.

However, the conductive carbon material that is mainly used as the conductive material is a material that is a fine powder having a small primary particle size, has strong cohesive force, and is extremely difficult to uniformly disperse. Therefore, when producing an electrode paste by mixing with a material such as an electrode active material, when cohesion is not sufficiently loosened such as by stirring for a long time, the conductive material is unevenly distributed in the electrode coating. As a result, a portion where conductivity is locally inferior being generated in the positive electrode plate and the electrode active material not being effectively utilized due to electrons not sufficiently moving, consequently becoming a cause of low charge and discharge capacity is raised as a disadvantage (patent document 1).

Therefore, a conductive material dispersed paste that aims to improve dispersibility by dispersing a conductive material in a solvent beforehand to make a liquid or paste-like conductive material has been proposed (patent documents 2 to 10 and the like). Furthermore, with an object to reduce environmental impact, art has been proposed wherein, after a conductive material dispersed paste is produced, conductive material microparticles are produced that suppress an amount of organic solvent used by removing the solvent by drying, and a powder thereof is used to produce a lithium ion rechargeable battery (patent document 11). Additionally, patent document 12 proposes a powdered carbon black composition that is obtained by filtering and drying the produced conductive material dispersed paste, removing the solvent, then disintegrating the paste in an agate mortar and passing through a sieve net having an opening diameter of 45 µm, and proposes a lithium ion rechargeable battery electrode that uses this carbon black composition.

### Prior Art Literature

### Patent Documents

Patent Document 1: JP 2003-308845 A
Patent Document 2: JP 2011-70908 A
Patent Document 3: JP 2011-113821 A
Patent Document 4: JP 4235788
Patent Document 5: JP 2010-238575 A
Patent Document 6: JP 2011-192020 A
Patent Document 7: JP 2007-335175 A
Patent Document 8: JP 2004-281096 A
Patent Document 9: JP 2009-252683 A
Patent Document 10: WO2014/042266
Patent Document 11: JP 2012-9227 A
Patent Document 12: JP 2018-62545 A

### Summary of Invention

### Problem to be Solved by Invention

However, with the art for producing the conductive material dispersed paste represented by patent documents 2 to 10 and the like, there are drawbacks such as the need to use a large amount of organic solvent having a high environmental impact during manufacturing, and the lack of long-term stability due to having sedimentation properties and re-cohesion properties. Furthermore, in the art disclosed in patent document 11, reduction of environmental impact and improvement of handling properties such as long-term stability, storage, and transportation have been successfully achieved by making a powder having the solvent removed, but there is a limit to the effect of improving battery performance because the electron conductivity imparted to the active material is insufficient and the ability thereof cannot be fully utilized because the uniformity of the conductive material in the electrode paste and in the electrode coating is insufficient. In the carbon black composition of patent document 12 as well, the electron conductivity applied to the active material is insufficient, and it is clear as a result of study by the inventors that a lithium ion rechargeable battery using the carbon black composition does not have sufficient battery performance.

An object of the present invention is to solve these problems found in prior art and to overcome these problems. That is, to provide: a novel conductive material having high dispersibility and uniformity in an electrode coating that achieves an improvement in battery performance while being a dried powder that is effective in reducing environmental impact and improving long-term stability; and a method for manufacturing the same.

### Means for Solving the Problem

The present inventors, as a result of extensive diligent research, have discovered that the problems described above can be solved by using conductive material composite particles that demonstrate predetermined physical properties and contain at least a conductive material and a dispersant, resulting in the present invention.

That is, the present invention provides:
(1) Conductive material composite particles containing at least a conductive material and a dispersant, characterized by: the particles having a particle size distribution D50 of 15 µm or more and a sieved particle size of 150 µm or less; a DBP oil absorption of the conductive material being 550 ml/100 g or less; and including the dispersant at 1 to 10 parts by weight to 100 parts by weight of the conductive material,
(2) Conductive material composite particles containing at least a conductive material and a dispersant, characterized by: the particles having a particle size distribution D50 of 15 µm or more and a particle size upper limit of 300 µm or less; a DBP oil absorption of the conductive material being 550 ml/100 g or less; and including the dispersant at 1 to 10 parts by weight to 100 parts by weight of the conductive material,
(3) The conductive material composite particles according to any one of (1) and (2), characterized by the OD value during dispersion evaluation being 3.0 or more,
(4) The conductive material composite particles according to (1) or (2), characterized by the dispersant being a nonionic dispersant,
(5) The conductive material composite particles according to (4), characterized by a weight average molecular weight of the nonionic dispersant being 1,000 to 1,000,000,
(6) The conductive material composite particles according to (1) or (2), characterized by a purity of the conductive material being 99.9% or more,
(7) The conductive material composite particles according to (1) or (2), characterized by an average primary particle size of the conductive material being 10 nm or more and 50 nm or less,
(8) The conductive material composite particles according to (1) or (2), wherein the conductive material is for a battery electrode,
(9) A method for manufacturing conductive material composite particles, including: a step for producing a conductive material dispersed paste containing at least a conductive material, a dispersant, and a dispersion medium; and a step for removing the dispersion medium from the conductive material dispersed paste, characterized by a particle size of the conductive material composite particles in the conductive material dispersed paste being 50 µm or less.
(10) The method for manufacturing conductive material composite particles according to (9), characterized by the conductive material dispersed paste not including foreign matter exceeding a particle size of 50 µm,
(11) The method for manufacturing conductive material composite particles according to (9) or (10), characterized by further including a drying step for heating the conductive material dispersed paste at 80°C or more and 300°C or less,
(12) A method for manufacturing an electrode, characterized by mixing the conductive material composite particles according to (1) or (2) with at least an active material and a binder, then coating on a substrate,
(13) A method for manufacturing an electrode, characterized by mixing the conductive material composite particles obtained by the manufacturing method according to (9) or (10) with at least an active material and a binder, then coating on a substrate,
(14) A lithium ion rechargeable battery that uses the electrode obtained by the method according to (12),
(15) An electricity storage device that uses the conductive material composite particles according to (1) or (2), and
(16) An electricity storage device that uses the electrode obtained by the method according to (12).

### Effect of Invention

The conductive material composite particles obtained by the present invention have a distribution that is adjusted to a particle size such that secondary cohesion is easily disintegrated in a kneading process during electrode paste production, and because the particles include a dispersant, a high dispersibility in a solvent is demonstrated. Therefore, since kneading for a long time is not required during electrode paste production, there is no risk of conductivity lowering due to re-cohesion or the like caused by excessive break-up. Moreover, the conductive material composite particles of the present invention easily form a conduction path in an electrode coating, and therefore have excellent conductivity and can dramatically improve battery performance such as charge and discharge capacity.

In addition, because coarse particles and foreign matter are removed, the conductive material is dispersed without being unevenly distributed in the paste and sufficient electron conductivity can be imparted by being uniformly distributed to the periphery of the active material. Therefore, an electrode coating that achieves excellent charge and discharge capacity can be formed. Furthermore, because local energization and short-circuiting due to uneven distribution of coarse particles and conductive materials are less likely to occur, it is thought that generation of defects such as thermal runaway of the battery and early reduction in charge and discharge ability can be suppressed and battery performance can be maintained for a long period of time.

Furthermore, because the conductive material composite particles obtained by the present invention are a dried powder that substantially does not include a solvent, there is no risk of deterioration over time due to sedimentation or solidification compared to a liquid or paste-like conductive material, and in addition to having a stability at which storage for a long period of time at room temperature is possible, the amount of organic solvent used during manufacturing can be reduced, reducing the impact on the environment.

Thus, according to the present invention, it is possible to produce conductive material composite particles having excellent long-term stability while suppressing impact on the environmental. Furthermore, by using the conductive material composite particles of the present invention as an electrode paste for production of a positive and negative electrode plate, it is possible to manufacture a lithium ion rechargeable battery having excellent battery performance such as high charge and discharge capacity and long-term stability of charge and discharge ability.

### Brief Description of Drawings

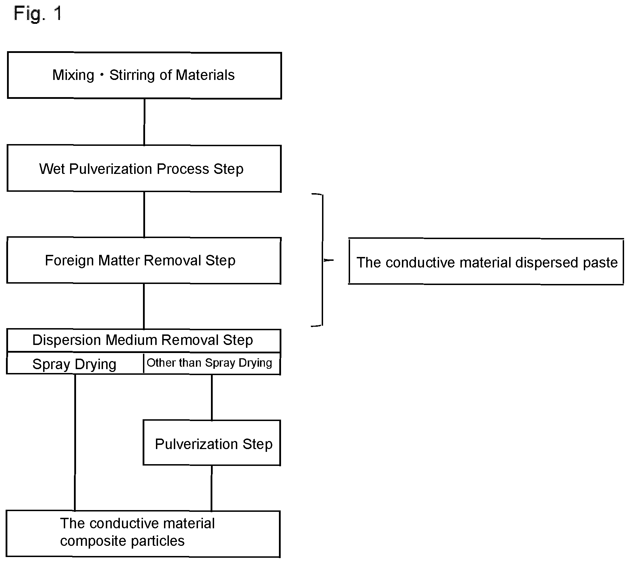

[FIG. 1] FIG. 1 is a diagram illustrating a flowchart for describing a manufacturing method of conductive material composite particles of the present invention.
[FIG. 2] FIG. 2 is a diagram illustrating an SEM (scanning electron microscope) photograph of a cross-section of a coating produced in example 1.
[FIG. 3] FIG. 3 is a diagram illustrating an EDS (energy dispersive X-ray spectroscope) analysis image of a cross section of the coating produced in example 1.
[FIG. 4] FIG. 4 is a diagram illustrating an SEM photograph of a cross-section of a coating produced in example 2.
[FIG. 5] FIG. 5 is a diagram illustrating an EDS analysis image of a cross-section of the coating produced in example 2.
[FIG. 6] FIG. 6 is a diagram illustrating an SEM photograph of a cross-section of a coating produced in example 3.
[FIG. 7] FIG. 7 is a diagram illustrating an EDS analysis image of a cross-section of the coating produced in example 3.
[FIG. 8] FIG. 8 is a diagram illustrating an SEM photograph of a cross-section of a coating produced in example 4.
[FIG. 9] FIG. 9 is a diagram illustrating an EDS analysis image of a cross-section of the coating produced in example 4.
[FIG. 10] FIG. 10 is a diagram illustrating an SEM photograph of a cross-section of a coating produced in comparative example 1.
[FIG. 11] FIG. 11 is a diagram illustrating an EDS analysis image of a cross-section of the coating produced in comparative example 1.
[FIG. 12] FIG. 12 is a diagram illustrating an SEM photograph of a cross-section of a coating produced in comparative example 2.
[FIG. 13] FIG. 13 is a diagram illustrating an EDS analysis image of a cross-section of the coating produced in comparative example 2.
[FIG. 14] FIG. 14 is a diagram illustrating an SEM photograph of a cross-section of a coating produced in comparative example 3.
[FIG. 15] FIG. 15 is a diagram illustrating an EDS analysis image of a cross-section of the coating produced in comparative example 3.
[FIG. 16] FIG. 16 is a diagram illustrating an SEM photograph of a cross-section of a coating produced in comparative example 4.
[FIG. 17] FIG. 17 is a diagram illustrating an EDS analysis image of a cross-section of the coating produced in comparative example 4.

### Embodiments of Invention

The conductive material composite particles of the present invention are particles including at least a conductive material and a dispersant. A detailed description will be given hereinafter.

### (Conductive Material)

Carbon black, carbon nanotubes, carbon nanofibers, graphite, graphene, hard carbon, and the like may be suitably used as a conductive material used in the present invention. Of these, carbon black, which is able to improve conductivity by efficiently forming a conduction path in the electrode by structure is preferable. Ketjenblack, furnace black, acetylene black, thermal black, or the like may be used as the carbon black, but acetylene black is particularly preferable due to having high conductivity and few impurities and having excellent heavy overload characteristics. Furthermore, one type of these conductive materials may be used alone or two or more types may be used together.

An average primary particle size of the conductive material is preferably 10 nm or more and 50 nm or less, more preferably 45 nm or less, and further preferably 40 nm or less. Furthermore, 10 nm or more is more preferable, and 15 nm or more is further preferable. When the average primary particle size of the conductive material is greater than 50 nm, a conductivity of the coating obtained from the electrode paste may decrease. Furthermore, when the average primary particle size is less than 10 nm, a viscosity of the conductive material dispersed paste and the electrode paste increases, and depending on the equipment used, dispersion of the conductive material may be difficult and handling properties may worsen.

Average primary particle size referred to here is an arithmetic mean particle size measured using a transmission electron microscope in accordance with ASTM:D3849-14.

A DBP oil absorption of the conductive material is characterized by being 550 ml/100 g or less. Preferably, 170 to 240 ml/100 g and most preferably 170 to 230 ml/100 g. When the DBP oil absorption of the conductive material is greater than 550 ml/g, the viscosity of the conductive material dispersed paste and the electrode paste increases, making dispersion difficult which leads to uneven distribution of the conductive material which may render exhibiting sufficient conductivity impossible.

The DBP oil absorption of the conductive material may be measured in accordance with JIS 6217-4.

A purity of the conductive material is preferably 99.9% or more, more preferably 99.95 to 100 mass%. By setting the purity of the conductive material within the above range, generation of battery short-circuiting due to impurities may be prevented and a defective rate may be reduced. Note that the purity of the carbon black may be calculated based on the amount of the impurities, taking ash measured in accordance with JIS K 1469 or JIS K 6218 as the impurities.

Specific examples of suitable conductive materials that satisfy the above conditions include the following carbon blacks: Denka Black powder, Denka Black granules, Denka Black FX-35, Denka Black HS-100, Denka Black LiLi-100, Denka Black LiLi-250, Denka Black LiLi-400, Denka Black LiLi-435 and the like (the above are product names, manufactured by Denka Company Limited), LITX 50, LITX 66, LITX6 0R, LITX2 00, LITX 300, LITX-HP and the like (the above are product names, manufactured by Cabot Specialty Chemicals Inc.), and SUPER P Li, C-NERGY SUPER C45, C-NERGY SUPER C65 (the above are product names, manufactured by Imerys Graphite & Carbon) and the like.

Of these, Denka Black powder, Denka Black granules, Denka Black FX-35, Denka Black HS-100, Denka Black LiLi-100, Denka Black LiLi-250, Denka Black LiLi-400, and Denka Black LiLi-435 are preferable, Denka Black granules, Denka Black FX-35, Denka Black LiLi-100, and Denka Black LiLi-435 are more preferable, and Denka Black granules and Denka Black FX-35 and particularly preferable.

### (Dispersant)

The term dispersant in the present invention refers to an additive used in preparing a stable dispersion by uniformly dispersing an inorganic or organic pigment in a dispersion medium, and is broadly divided into anionic, cationic, nonionic, and amphoteric depending on the ionic nature thereof. Any dispersant may be used as the dispersant in the present invention so long as it has an effect of preventing re-cohesion of the conductive material particles after cohesion of the conductive material has been loosened and of uniformly distributing the conductive material particles in the solvent. Among these, a nonionic dispersant that does not have an ionic functional group is suitable because movement of lithium ions is not hindered.

A dispersant that does not have an effect on electrical characteristics when used as a binder after film formation or a dispersant that has a low decomposition temperature at which it is removed by a heating treatment during electrode production is suitably used as the nonionic dispersant. Examples of a dispersant having these characteristics include polyvinylpyrrolidone, polyvinyl butyral, polyvinylidene fluoride, polytetrafluoroethylene, polyhexafluoropropylene, polyvinyl alcohol, polyvinyl acetal, polyvinyl ether, polyether, polyhydric alcohol ester, cellulose acetate, cellulose acetate butyrate, methyl cellulose, ethyl cellulose, hydroxyethyl cellulose, ethyl hydroxyethyl cellulose, hydroxyethyl cellulose, hydroxypropyl cellulose, and hydroxypropyl methyl cellulose. Among these, methylcellulose or polyvinylpyrrolidone is most preferable.

The nonionic dispersant preferably has a weight average molecular weight of 1,000 or more and 1,000,000 or less. This is more preferably 5,000 or more and 300,000 or less, and further preferably 5,000 or more and 200,000 or less. When the weight average molecular weight exceeds 1,000,000, a viscosity of the conductive material dispersed paste becomes high, and handling properties worsen, such as fluidity being lost and discharge properties becoming worse. On the other hand, when the weight average molecular weight is below 1,000 dispersibility is poor and manufacturing of the conductive material dispersed paste becomes difficult. These nonionic dispersants may be used alone or in combination of two or more types.

Weight average molecular weight may be measured using gel permeation chromatography (GPC). An example of measurement conditions by gel permeation chromatography is described below.
Device: high-speed liquid chromatograph (manufactured by Shimadzu Corporation, Prominence)
Column: manufactured by Shodex Corporation, OHpak SB-802.5 HQ
   manufactured by Shodex Corporation, OHpak SB-804 HQ
Detector: RI
Eluate: 0.5 M NaCl aqueous solution
Flow rate: 1.0 ml/min
Sample concentration: 0.2 wt/vol%
Column temperature: 40°C

### [Method for Manufacturing Composite Particles]

The method for manufacturing the composite particles of the present invention is not particularly limited, but as an example of a suitable embodiment disclosed herein, a conductive material dispersed paste is produced by mixing the above materials with a dispersion medium and an additive, stirring, and performing a wet pulverization process on the obtained mixture, then producing the conductive material composite particles by removing the dispersion medium of the conductive material dispersed paste by drying. Note that the conductive material dispersed paste of the present invention refers to a paste of a state in which a conductive material is disintegrated into a liquid dispersion medium and is uniformly stabilized.

### (Dispersion Medium)

The dispersion medium used in the conductive material dispersed paste is not particularly limited so long as the conductive material may be dispersed and the dispersion medium is removeable in a subsequent drying step, but the dispersant used is preferably dissolved uniformly. Solvents that may uniformly dissolve the dispersant used in the present invention include water, methanol, ethanol, N-methyl-2-pyrrolidone, methyl ethyl ketone, and the like. When used for a lithium ion rechargeable battery, water or N-methyl-2-pyrrolidone is generally selected, but water is suitable from the perspective of consideration for safety and convenience in a subsequent drying step and for environmental aspects.

A blending amount of the dispersion medium is preferably had in the range of 99.0 to 50.0 mass%, more preferably in the range of 99.0 to 60.0 mass%, and further preferably in the range of 99.0 to 70.0 mass%. When a dispersion medium amount is less than 50 mass%, fluidity of the conductive material dispersed paste becomes poor, and it may be difficult to make the maximum particle size and viscosity to be within a preferable range in the wet pulverization process step.

### (Additives)

At the time of producing the conductive material dispersed paste, any additive may be selected and included according to necessity. Examples of additives include pH adjusting agents, binders, solvents, thickening agents, antifoaming agents, surfactants, preservatives, anti-molding agents, and the like. Any amount may be contained according to a performance requirement desired by the electrode, a dispersion medium blending amount, and the like so long as the effect of the present invention is not hindered.

Examples of a pH adjusting agent include potassium hydroxide, sodium hydroxide, triethanolamine, and the like. The pH adjusting agent described above may be contained alone, or two or more types may be contained in combination. The content of the pH adjusting agent may be suitably adjusted according to a target pH.

Examples of a binder include water-soluble polymers, emulsion resins, and the like. The binder may be natural, semi-synthetic, or synthetic. Specifically, cellulose, starch, and modified products thereof, natural rubber, rosin, and modified products thereof, polyvinyl alcohols, acrylic resins, epoxy resins, urethane resins, melamine resins, and the like may be used as a binder. The binder described above may be contained alone, or two or more types may be contained in combination.

A solvent may be contained as an additive in order to adjust a drying property and a film forming property of the coating film. The solvent herein refers to a substance that is separate from the dispersion medium used for a wet pulverization process and refers to a substance such as the following used as an adjusting agent.

As examples, alcohols, alkyl ether alcohols, glycols, diols, and the like may be used. Examples of alcohols include methanol, ethanol, isopropyl alcohol, and the like. Examples of alkyl ether alcohols include ethylene glycol monomethyl ether, diethylene glycol monoethyl ether, diethylene glycol monobutyl ether, triethylene glycol monobutyl ether, propylene glycol monobutyl ether, and the like. Examples of glycols include ethylene glycol, diethylene glycol, triethylene glycol, tetraethylene glycol, propylene glycol, dipropylene glycol, tripropylene glycol, polyethylene glycol having a number average molecular weight of 2,000 or less, and the like. Examples of diols include glycerin and the like. The solvent described above may be contained alone, or two or more types may be contained in combination.

Examples of a thickening agent include natural polysaccharides and synthetic polymer thickening agents. Examples of natural polysaccharides include guar gum, locust bean gum, galactomannan, pectin, and derivatives thereof, psyllium pseudogum, tamarind gum, microbial xanthan gum, reozan gum, ramzan gum, welan gum, gellan gum, carrageenan of seaweed polysaccharides, alginic acid and derivatives thereof, and tragacanth gum of resin polysaccharides, cellulose and derivatives thereof. Examples of synthetic polymer thickening agents include polyacrylic acid and cross-linked copolymers thereof, polyvinyl alcohol, polyvinylpyrrolidone and derivatives thereof, polyvinylmethyl ether and derivatives thereof, and in-water activator emulsion, in-water self emulsification, and in-water core-shell emulsion of polyether acrylic resin and silicone acrylic resin. The thickening agent described above may be contained alone, or two or more types may be contained in combination.

### (Mixing and Stirring of Materials)

First, the dispersant is weighed so that the weight ratio relative to the conductive material becomes a ratio that will be described below, added to a dispersion medium, stirred, and sufficiently dissolved. When an additive is added, the additive is added at the same time as the dispersant to an extent that does not inhibit the function of each material depending on the application. A method for stirring the material is not particularly limited, and a commercially available stirrer, kneading machine, mixer, or the like may be used. Next, a conductive material is added to the dispersant solution and stirred to obtain a conductive material mixture.

### (Wet Pulverization Process Step)

A wet pulverization process is applied to the conductive material mixture, and the mixture is pulverized and dispersed until reaching a predetermined viscosity and maximum particle size to obtain a predetermined conductive material dispersed paste to be described below. A commercially available wet pulverization device and wet dispersion device may be used for the wet pulverization process. So long as the device is able to perform pulverization to a predetermined viscosity and maximum particle size, the method, type, and the like thereof are not limited in any way, and a wet media dispersion machine such as a ball mill, sand grinder, Dyno-mill, spike mill, DCP mill, basket mill, paint conditioner, or the like, and a media-less dispersion machine such as a nanomizer, altimizer, ultrasonic dispersion machine, thin film swivel type high-speed mixer, roll mill, colloidal mill, high-pressure dispersion machine, homogenizer, in-line mixer, or the like may be selected.

The particle size of the carbon black in the conductive material dispersed paste at maximum is preferably 50 µm or less, preferably less than 50 µm, more preferably 40 µm or less, and particularly preferably 30 µm or less.

When the maximum particle size of the paste exceeds 50 µm, distribution of the active material and the conductive material in the electrode coating of the battery may become nonuniform and impair battery performance. The maximum particle size may be measured using a grind gage in accordance with JIS K 5600-2-5.

A viscosity of the conductive material dispersed paste is preferably 3,000 mPa • s or less, more preferably 2,000 mPa • s or less, and further preferably 1,000 mPa • s or less. By setting the viscosity of the paste within the above range, fluidity is improved and handling properties such as liquid feed, discharge, and the like become favorable.

### (Foreign Matter Removal Step)

Because it is not possible to completely remove particles exceeding 50 µm in the measurement of the maximum particle size by the grind gage, it is preferable to include a step for removing foreign matter and coarse particles exceeding 50 µm after the conductive material dispersed paste is produced. The foreign matter referred to here means any substance including a conductive material exceeding 50 µm included in the dispersion paste. By removing the foreign matter and coarse particles, formation of a short circuit by coarse particles contacting each other on the electrode coating when used in the electrode paste may be prevented, and a risk of an internal short circuit occurring in the battery may be reduced. A method for foreign matter removal is not particularly limited, but foreign matter of a predetermined size or greater may be removed by feeding the conductive material dispersed paste using a liquid feed pump or the like, and passing through a filter or magnetic separator set on the path.

### (Dispersion Medium Removal Step)

The conductive material dispersed paste produced by the aforementioned method is dried, and a part or all of the dispersion medium is removed and granulated, thereby producing the conductive material composite particles of the present invention. A method for removing the dispersion medium is not particularly limited, and a commercially available dryer such as a freeze dryer, spray dryer, airflow dryer, thermal dryer, fluidized bed dryer, or the like may be used.

### (Spray Drying)

Of these drying methods, it is particularly preferable to use spray drying that may perform particle formation and particle size adjustment at the same time as drying and that has a benefit of shortening the step and simplifying equipment. Various spray dryers may be used in the spray drying method, and examples include a centrifugal spray type or a spray spray type, but there is no particular limitation so long as the method is one in which a liquid or a mixture of a solid and a liquid or the like is sprayed into a gas and dried. When a spray dryer is used, droplet size may be reduced in diameter by increasing a feed rate of the conductive material dispersed paste that is the material, a supply rate of compressed air, and a rotational speed of the disk. By this operation, the particle size after drying may be adjusted to be within a predetermined range that will be described below, and the conductive material composite particles of the present invention may be obtained.

### (Temperature Adjustment during Drying)

During drying of the conductive material dispersed paste, drying speed may be increased by increasing the heating temperature, and an amount of water after drying may be further reduced. The heating temperature during drying may be arbitrarily finely adjusted from the temperature at which each material dries, but when the temperature is below 80°C for all of the conductive materials, moisture easily remains in the powder after drying, and when the temperature exceeds 300°C, the material easily deteriorates and decomposes. Therefore 80 to 300°C is preferable, and 100 to 150°C is more preferable.

### (Amount of Water after Drying)

In dispersion medium removal, an amount of water of the conductive material composite particles after drying is preferably 4 wt% or less, and is more preferably 1 wt% or less. A dispersion medium such as water remaining in the conductive material composite particles reduces the solubility of polyvinylidene fluoride, which is most commonly used as a binder during electrode pasting, and causes a decrease in strength in the composite material layer and a decrease in adhesion between the composite material layer and the metal foil because a uniform coating cannot be produced. Furthermore, the residual water decomposes during initial charging when made a lithium ion rechargeable battery, and the generated hydrogen and oxygen cause deterioration of the members in the battery. When the amount of water exceeds 4 wt%, there is a risk that the effects of these actions becomes large and the battery performance is reduced. After drying, the amount of water is measured, and when the amount of water remaining is large, drying time is extended and drying is performed until the amount becomes a predetermined value or less. The amount of water may be measured using a commercially available moisture meter such as a halogen lamp heating moisture meter (manufactured by Shinko Denshi Co., Ltd., MA-120).

### (Pulverization Step)

When a drying method other than spray drying is used in the dispersion medium removal step, the conductive material dispersed paste after drying is pulverized until a powder having a predetermined particle size, which will be described below, is obtained. A method for pulverization is not particularly limited, and a generally used method such as a hammer mill, crusher, mixer, mortar, or ball mill may be suitably selected according to equipment conditions and production amount.

### (Sieving)

The conductive material composite particles from which the dispersion medium has been removed may be classified by sieving to obtain conductive material composite particles having a specific particle size range.

An operation of sieving is not particularly limited, but may be performed as follows. Among a plurality of sieves having different nominal aperture sizes in accordance with JIS 8801 - 1, those having large aperture sizes are stacked in order on top, and conductive material composite particles are placed in a topmost sieve, then shaken for 30 minutes by an electromagnetic sieve shaking machine (manufactured by Fritsch Japan Co., Ltd.), and conductive material composite particles are classified by particle size. By taking out particles that have passed through the desired aperture sizes and particles that have not passed, conductive material composite particles classified into predetermined particle sizes may be obtained.

The conductive material composite particles obtained by these operations have the following characteristics and preferable properties.

A particle size distribution D50 of the conductive material composite particles of the present invention is 15 µm or more. The distribution is preferably 20 µm or more, and furthermore, is particularly preferably 25 µm or more.

As a result of study by the present inventors, it was discovered that when the particle size distribution D50 is smaller than 15 µm, the battery charge and discharge capacity and cycle characteristics decrease. Furthermore, it was also discovered that when kneading for 10 minutes or more when mixing with the active material and making the electrode paste, conductivity is greatly impaired. A mechanism thereof is not entirely clear, but the inventors surmise as follows.

As described above, the conductive material makes a connection between the electrode and the active material in the electrode coating, as well as between the active materials to form a conduction path, thereby contributing to improvement in conductivity and battery performance. Here, a force is also applied to the conductive material when the electrode paste is kneaded, but the effect of this force differs between when particle size is large and when particle size is small. Specifically, for example, when the conductive material is carbon black, the carbon black generally forms structures in which primary particles are linked by chemical bonds, and the structures form secondary agglomerates (agglomerates) of several tens to several hundreds of microns that are strongly cohered due to further van der Waals bonds, simple adhesion, entanglement, or the like. Even within the conductive material composite particles, the carbon black mainly exists in a state of secondary agglomerates. When a force is applied to the composite particles due to kneading during electrode paste production, this force naturally applies to the secondary agglomerates within the composite particles, but when particles are large, a majority of the force is used to loosen the secondary agglomerates, and after loosening the cohesion, the force is not easily used until the bonds between the structures are also cut. Therefore, since dispersion is performed in the paste in a state held to an extent that there are bonds between the structures even after kneading, a conduction path easily forms, and conductivity and battery performance improve. However, when particles are small, development of secondary agglomerates is small, and there is no need for a large force for loosening, so it is thought that after the cohesion is loosened, the force applied by kneading is mostly used to further cut the bonds between structures. Therefore, a single structure in which the bonds are disconnected or a small agglomerate in which only a small number of structures are bonded is dispersed in the paste, a conduction path is not easily formed, and high conductivity and battery performance cannot be exhibited.

As an index indicating the range of particle sizes in which bonds between the structures may be maintained after electrode pasting by the above action and high conductivity and battery performance may be expressed, in addition to the particle size distribution D50, a particle size distribution D 10, a particle size distribution D90, an average particle size, and the like may also be used.

When using the particle size distribution D 10 as an index, 10 µm or more is preferable, and 15 µm or more is particularly preferable. Furthermore, when using the particle size distribution D90 as an index, 30 µm or more is preferable, and 40 µm or more is particularly preferable.

In the present invention, the particle size distributions D10, D50, and D90 refer to values corresponding to particle sizes where a volume accumulation is 10% for D 10, 50% for D50, and 90% for D90. This volume accumulation is when a cumulative particle size distribution curve of measured values obtained by imaging a scattered group of particles using a scanning electron microscope and measuring the maximum diameter passing through a center point of each particle is drawn from the small diameter side.

The particle size distributions D10, D50, and D90 of the conductive material composite particles may be measured by the following method, but so long as the same result may be obtained, a measurement method thereof is not limited to this.

First, a conductive sample table is used for antistatic purposes, and conductive material composite particles are scattered on the sample table such that the particles do not overlap each other. Next, using a scanning electron microscope (manufactured by Hitachi High-Technologies Corporation, FlexSEM 1000) and AZtec (made by Oxford Instruments, particle analysis software), calculation may be performed from values of diameters for which 300 or more particles were analyzed

In a first invention of the present application, the conductive material composite particles preferably have a sieved particle size of 150 µm or less. The sieved particle size is more preferably 100 µm or less and particularly preferably 75 µm or less.

By setting the sieved particle size to 150 µm or less, coarse particles are removed and battery performance may be improved. When the sieved particle size is greater than 150 µm, uneven distribution of the conductive material occurs in the electrode coating, and sufficient electron conductivity cannot be imparted to the active material.

The sieved particle size referred to here is the smallest aperture size through which target particles pass among the nominal aperture sizes of sieves in accordance with JIS 8801-1. So long as the sieve is in accordance with JIS 8801-1, the operation of sieving is not particularly limited, but using the method disclosed in 0039, particles may be passed through sieves of different sizes in a single measurement, and particle size measurement, particle classification, and particle extraction of a desired particle size may be performed at the same time.

In a second invention of the present application, the conductive material composite particles have a particle size upper limit of 300 µm or less. Preferably, the particle size upper limit is 200 µm or less, and particularly preferably 100 µm or less. By making the particle size upper limit to be 300 µm or less, coarse particles are removed, and the composite particles may obtain sufficient dispersion force. As a result, the conductive material is uniformly dispersed in the paste and in the electrode coating at the time of electrode pasting and coating, and sufficient conductivity may be imparted to the active material, and the charge and discharge capacity of the battery may be improved. When the particle size upper limit is greater than 300 µm, the composite particles are too large for a general active material size of several µm to several tens µm, and the composite particles cannot obtain a sufficient dispersion force due to kneading during electrode pasting, uneven distribution of the conductive material in the electrode coating occurs, and sufficient electron conductivity cannot be imparted to the active material.

In the present invention, the particle size upper limit refers to a measurement value found by the following method. However, so long as the same result may be obtained, a measurement method thereof is not limited to this.

First, a conductive sample table is used for antistatic purposes, and conductive material composite particles are scattered on the sample table such that the particles do not overlap each other. Next, using a scanning electron microscope (manufactured by Hitachi High-Technologies Corporation, FlexSEM 1000) and AZtec (made by Oxford Instruments, particle analysis software), a maximum diameter that passes through a center point of each particle is measured for approximately 300 particles, and the largest among these measurement values may be found.

The conductive material composite particles of the present invention preferably have an average particle size of 20 µm to 80 µm. This is more preferably 25 µm to 60 µm or less, and most preferably 25 µm to 40 µm or less.

By making the average particle size to be within the range above, uneven distribution of the conductive material is less likely to occur and handling properties improve. Furthermore, because a conduction path is easily formed by the aforementioned action, this contributes to improving conductivity and battery performance. The average particle size referred to here is the arithmetic mean of the largest among diameters that pass through a center point of each particle, and may be found as follows, but so long as the same result may be obtained, a measurement method thereof is not limited to this.

First, a conductive sample table is used for antistatic purposes, and conductive material composite particles are scattered on the sample table such that the particles do not overlap each other. Next, using a scanning electron microscope (manufactured by Hitachi High-Technologies Corporation, FlexSEM 1000) and AZtec (made by Oxford Instruments, particle analysis software), calculation may be performed from values of diameters for which 300 or more particles were analyzed.

The conductive material composite particles of the present invention may include 9% or more of particles having an aspect ratio of less than 1.2. Such conductive material composite particles have excellent handleability during powder feeding, storage, etc. and dispersibility when making a conductive paste, compared with particles having less than 9% particles having an aspect ratio of less than 1.2. Moreover, the particles having an aspect ratio of less than 1.2 may be included at 55% or more and particles having an aspect ratio of less than 1.5 may be included at 85% or more. Particles including particles having an aspect ratio of less than 1.2 and less than 1.5 that are included at a ratio equal to or greater than the above are extremely preferable because dispersibility when making an electrode paste is particularly improved and handling properties during powder feeding, storing, and the like are also improved. In particular, by forming particles using the spray drying described above, conductive material composite particles having an aspect ratio such as this that is close to 1 and having particularly excellent handling properties and dispersibility may be obtained.

The aspect ratio of the conductive material composite particles of the present invention refers to a ratio (a/b) of the largest diameter that passes through a center point of each particle (a) and the smallest diameter (b), and may be found as follows, but so long as the same result may be obtained, a measurement method thereof is not limited to this.

First, a conductive sample table is used for antistatic purposes, and conductive material composite particles are scattered on the sample table such that the particles do not overlap each other. Next, using a scanning electron microscope (manufactured by Hitachi High-Technologies Corporation, FlexSEM 1000) and AZtec (made by Oxford Instruments, particle analysis software), the aspect ratio of each particle is measured and calculation may be performed from measurement values of 300 or more particles.

The aspect ratio of the conductive material composite particles may be set within the above range by using each of the materials and the manufacturing method above, but more particles having an aspect ratio close to 1 may be produced by using spray drying in particular when drying.

The conductive material composite particles of the present invention preferably have an angle of repose of less than 45°. More preferably, the angle of repose is less than 38°. By setting the angle of repose within the above range, fluidity is favorable, crosslinking does not occur during storage, and stirring and shaking before use are unnecessary, and therefore handling properties during manufacture and use are excellent.

The angle of repose referred to here may be found by gently depositing powder on a horizontal surface and reading the angle formed by the slope of a naturally formed mountain and the horizontal surface in accordance with measurement methods defined in the Japanese Industrial Standard JIS 9301-2-:2: 1999, but so long as the same result may be obtained, a measurement method thereof is not limited to this.

The conductive material composite particles include 1 to 10 parts by weight of the dispersant to 100 parts by weight of the conductive material. More preferably, the particles include 4 to 10 parts by weight of the dispersant and most preferably include 6 to 10 parts by weight. By using the dispersant, the conductive material may be uniformly disintegrated and dispersed in the dispersion medium during the wet pulverization process. Furthermore, the dispersant is present in the particles of the conductive material composite particles after drying, and therefore dispersibility with respect to the solvent improves. When the dispersant is less than 1 part by weight, there is a problem in that a sufficient dispersion effect cannot be obtained in the dispersion medium in the wet pulverization process. Furthermore, when the dispersant exceeds 10 parts by weight, the resistance value rises, and there is a problem in that an adverse effect is had on battery performance when becoming an electrode coating.

With the manufacturing method disclosed above, the decomposition temperature of the dispersant is not exceeded and even after material mixing, wet dispersion, dispersion medium removal, and the pulverization step, the dispersant is substantially not removed or is covered by the conductive material and removed and a ratio relative to the conductive material is maintained. Therefore, by setting the weight ratio of the dispersant added during material mixing and stirring to be within the range described above, the weight ratio in the conductive material composite particles may also be set within this range.

However, depending on the facility used and the type of dispersant, the dispersant ratio may change, and therefore the dispersant content in the conductive material composite particles after production may be measured and confirmed as necessary by the following method.

The conductive material composite particles are heated until a time at which the dispersant is thermally decomposed and the dispersant may be fully decomposed at a temperature at which the weight of the conductive material does not change, and the weight of the dispersant may be determined from the weight difference between before and after heating.

Note that the weight of the dispersant is converted by the amount of the active ingredient when the dispersant is dissolved or dispersed in another solvent or the like. In order to find the content ratio of each ingredient in the composite particles, heating is performed continuously in a temperature range at which the dispersant decomposes and the conductive material does not decompose and thermogravimetric change of the dispersant is measured by TG-DTA (thermogravimetry differential thermal analyzer) so that confirmation can be easily performed. As a specific example, measurement may be performed using TG-DTA (manufactured by Bruker Japan) by holding the conductive material composite particles at 100°C for one hour to completely remove moisture, raising the temperature to 300°C at a rate of 5°C per minute, and then holding for another hour to decompose the dispersant. The weight after holding 300°C is the weight of only the conductive material, and the difference between the weight after holding at 100°C and the weight after holding 300°C is the amount of dispersant in the conductive material composite particles.

A bulk density of the conductive material composite particles is preferably 0.04 g/ml or more. This is more preferably 0.10 g/ml or more and further preferably 0.20 g/ml or more. By setting the bulk density to be equal to or greater than the above value, particles are less likely to fly about in the production plant, and transport and storage costs may be reduced because dust collection equipment and the like are not required. Measurement of the bulk density may be performed by measuring the initial bulk density in accordance with R-1627-1997.

As a dispersibility evaluation of the conductive material composite particles, it is preferable that the arithmetic mean roughness (Ra) when coating is 0.4 or less. This is more preferably 0.3 or less, and further preferably 0.2 or less. The arithmetic mean roughness (Ra) is a numerical value calculated by measuring irregularities in the height direction of a surface in a certain reference length (interval), using the average value as a reference line, and by averaging the absolute values of distances from the reference line in the interval. A high arithmetic mean roughness (Ra) value means that there are many irregularities, that is, there is a high possibility that there is cohesion of the conductive material, uneven distribution, coarse particles, or foreign matter that are main causes of irregularities on the coating. When the arithmetic mean roughness is greater than 0.4, these effects are greater and there is a possibility that uniform dispersion of the conductive material in the electrode coating is hampered.

In the present invention, arithmetic mean roughness refers to a numerical value specified by the following method, but so long as the same result may be obtained, a method thereof is not limited to this. First, a paste is produced by weighing and adding to a solution where a commercially available polyvinylidene fluoride (manufactured by Kureha Corporation, "KF Polymer-W#7200") that is a binder is diluted to 8.0% by N-methyl-2-pyrrolidone that is a solvent so that the conductive material composite particles become 8.3% of the overall amount, and then kneading for 1 minute at 2,000 rpm using a THINKYMIXER (manufactured by Thinky Corporation, Awatori Rentaro). The paste is coated onto a glass plate using an applicator so that the film thickness after drying is 7.5 to 8.5 µm, and then dried for 30 minutes using a hot air dryer at 100°C to obtain a coating from which the solvent has been removed. The obtained coating is "a coating for dispersibility evaluation". A surface roughness of the coating for dispersibility evaluation is measured using a contact type surface roughness meter (manufactured by Tokyo Seimitsu Co., Ltd., Surfcom 130A), and the arithmetic mean roughness is calculated.

In a third invention of the present application, the conductive material composite particles have an optical concentration OD value during dispersion evaluation of 3.0 or more. This is more preferably 3.5 or more, and further preferably 4.0 or more. The OD value during dispersion evaluation referred to here is a numerical value found by measuring the dispersibility evaluation coating described above using a spectral density meter (manufactured by Videojet X-Rite K.K, x-rite), but so long as the same result may be obtained, a measurement method is not limited to this. The OD value is a value where a spectral transmittance of a coating is measured and an absorption degree of light is displayed as a logarithm, and it is known that the numerical value increases as light permeating through the coating decreases. As a result of study by the present inventors, it was found that there is a correlation between the OD value and electrical characteristics, and that excellent performance as a battery material may be obtained by adjusting the OD value within a predetermined range when the conductive material composite particles are made into a coating. More specifically, the conductive material composite particles having an OD value of 3.0 or more during coating are found to have the conductive material uniformly dispersed when making into an electrode coating, and as a result, charge and discharge capacity increases. Furthermore, it was also found that when a battery is made using conductive material composite particles having an OD value of less than 3.0 during coating, the uniformity of the dispersion of the conductive material tends to be low, and thus the charge and discharge capacity is prone to decrease.

The following are considered as reasons for this. When the uniformity of the dispersion of the conductive material is insufficient and a large number of conductive materials are cohered and unevenly distributed in the coating, portions where the conductive material is not locally present are nonuniformly generated. Because such portions do not absorb light, light that passes through the entire coating increases, and as a result, the OD value decreases. Conductive material not being uniformly dispersed in the coating leads to a reduction in charge and discharge capacity when an active material is made into a battery because sufficient electron conductivity cannot be imparted to the active material, and leads to a reduction in capacity at an early stage due to local energization. Therefore, it may be considered that a reduction in the OD value is indicative of insufficient dispersibility of the conductive material and a reduction in performance when made into a battery.

The conductive material composite particles of the present invention that satisfy the above properties exhibit the following performance and effects. Since a shear viscosity of the conductive material when made into the electrode paste is lower than that of the conductive material in the form of a powder not including a dispersant or the like, the coatability is excellent and since there is a proper viscosity gradient at low shear and high shear, settling of the active material can be suppressed and uneven distribution of the conductive material may be prevented when made into a coating. Furthermore, because cohesion is prone to loosening in the kneading step when making into the electrode paste, the film thickness becomes constant when making into a coating, and a location where the film thickness is locally reduced or a location where the coating is not formed is not easily generated, thereby improving yield. Moreover, when making into the electrode paste, the paste is brought into a uniform state in a short stirring time compared to a conductive material in the form of a powder, and therefore, a cost advantage due to a reduction in step time may be obtained.

In addition, because the conductive material is less likely to be unevenly distributed in the coating compared to the conventional conductive material composite particles, it is thought that the conductive material may be uniformly dispersed among a larger number of active materials in the electrode coating, thereby imparting electron conductivity and increasing charge and discharge capacity, and that the occurrence of early capacity reduction due to local current concentration in the positive and negative electrodes may be reduced.

Furthermore, because a solvent is not included in the conductive material composite particles, the amount of organic solvent used during manufacture may be reduced compared to a slurry conductive material dispersed paste, the impact on the environment may be reduced, and use is possible regardless of the type or presence of a solvent used during electrode pasting.

### (Method for Manufacturing a Lithium Ion Rechargeable Battery)

The lithium ion rechargeable battery of the present invention may be produced by winding: a positive electrode, which is produced by coating and drying an electrode paste-produced by dispersing the conductive material composite particles of the present invention in a nonaqueous solvent such as N-methyl-2-pyrrolidone together with an electrode active material and a binder-on a metal substrate; or a negative electrode, which is produced by coating and drying an electrode paste-produced by dispersing the conductive material composite particles of the present invention in a solvent such as water together with an electrode active material and a binder-on a metal substrate, together with a separator, and housing this in a battery can along with an electrolyte. In order to prevent the occurrence of pressure increases, overcharge or discharge, and the like inside the battery, an overcurrent prevention element such as a fuse or a PTC element, an expanded metal, a lead plate, and the like may be provided as necessary. Furthermore, a shape of the battery may be any shape, for example, a coin type, a button type, a sheet type, a cylindrical type, a square type, a flat type, or the like.

### (Method of Use in Other Electricity Storage Devices)

The characteristics of the conductive material composite particles of the present invention, such as uniformity during dispersion and substantially not including a solvent, are not limited to lithium ion rechargeable batteries, and are effective in improving charge and discharge performance, reducing costs, reducing environmental impact, and the like even when used in other electricity storage devices.

In particular, in an electricity storage device in which a carbon material such as carbon black, carbon nanotubes, graphite, or the like, and a slurry using these are used as a conductive material, the conductive material composite particles of the present invention may be suitably used as a substitute for the existing conductive materials.

For example, these may be suitably used in primary batteries such as alkaline manganese dry cells and nickel manganese batteries, rechargeable batteries such as nickel-metal hydride batteries, nickel-cadmium batteries, sodium-sulfur batteries, and sodium-ion batteries, condensers (capacitors) and the like, and other electrochemical elements.

When using in these electricity storage devices, the already used conductive material may be replaced by the conductive material composite particles of the present invention. If the existing conductive material is a conductive material in the form of a powder of carbon black or the like, replacement may be performed as-is . When the conductive material is in the form of a slurry of a carbon black dispersion or the like, use by replacing the conductive material with the conductive material composite particles of the present invention, adjusting the solid content of the electrode paste, and finishing to an appropriate viscosity is possible.

### Examples

The present invention will be described more specifically below using examples.

### (Example 1)

One part by weight of methylcellulose polymer (weight average molecular weight 35,000 as measured by GPC) was added as a dispersant to 84 parts by weight of deionized water used as a dispersion medium, and this was sufficiently dissolved in a commercially available stirrer to obtain a dispersant solution. Next, 15 parts by weight of acetylene black (manufactured by Denka Company Limited, "Denka Black granules") having an average primary particle size of 35 nm by a measurement method in accordance with ASTM:D3849-14 was added as a conductive material to 85 parts by weight of the obtained dispersant solution, and a conductive material mixture was obtained by mixing and stirring using a commercially available stirrer. The obtained conductive material mixture was subjected to a wet pulverization treatment using a commercially available horizontal bead mill to break up the conductive material until particles of 50 µm or more were eliminated on evaluation using a grind gage, and a conductive material dispersed paste was obtained. The obtained conductive material dispersed paste was filtered using a mesh having an aperture size of 50 µm to remove foreign matter, thereby obtaining a conductive material dispersed paste 1.

The conductive material dispersed paste 1 was dried using a commercially available spray nozzle spray dryer at an inlet temperature of 160°C and a spray pressure of 0.03 MPa of the dryer, and conductive material composite particles 1 having sieved particle sizes of 75 µm or less and 45 µm or more were obtained by classification using an electromagnetic sieve shaker (manufactured by Fritsch Japan Co., Ltd.).

### (Example 2)

One part by weight of polyvinylpyrrolidone (weight average molecular weight 66,800 as measured by GPC) was added as a dispersant to 84 parts by weight of deionized water used as a dispersion medium, this was sufficiently dissolved in a commercially available stirrer, and thereafter, operations similar to example 1 were performed to obtain a conductive material dispersed paste 2.

Other than using this conductive material dispersed paste 2, subsequent operations performed were also similar to example 1, and conductive material composite particles 2 having sieved particle sizes of 75 µm or less and 45 µm or more were obtained by classification using an electromagnetic sieve shaker (manufactured by Fritsch Japan Co., Ltd.).

### (Example 3)

The conductive material dispersed paste 1 obtained by performing operations similar to example 1 was dried for 12 hours at 100°C using a commercially available hot air dryer, the obtained dried body was pulverized using a commercially available cutter mixer, and then conductive material composite particles 3 having sieved particle sizes of 75 µm or less and 45 µm or more were obtained by performing classification using an electromagnetic sieve shaker (manufactured by Fritsch Japan Co., Ltd.).

### (Example 4)

The conductive material dispersed paste 1 obtained by performing operations similar to example 1 was dried for 12 hours at 100°C using a commercially available hot air dryer, the obtained dried body was pulverized using a commercially available cutter mixer, and then conductive material composite particles 4 having sieved particle sizes of 150 µm or less and 75 µm or more were obtained by performing classification using an electromagnetic sieve shaker (manufactured by Fritsch Japan Co., Ltd.).

### (Comparative Example 1)

The conductive material dispersed paste 1 obtained by performing operations similar to example 1 was dried for 12 hours at 100°C using a commercially available hot air dryer, the obtained dried body was pulverized using a commercially available cutter mixer, and then conductive material composite particles 5 having sieved particle sizes of 250 µm or less and 150 µm or more were obtained by performing classification using an electromagnetic sieve shaker (manufactured by Fritsch Japan Co., Ltd.).

### (Comparative Example 2)

The conductive material dispersed paste 1 obtained by performing operations similar to example 1 was dried for 12 hours at 100°C using a commercially available hot air dryer, the obtained dried body was pulverized using a commercially available cutter mixer, and then conductive material composite particles 6 having sieved particle sizes of 500 µm or less and 250 µm or more were obtained by performing classification using an electromagnetic sieve shaker (manufactured by Fritsch Japan Co., Ltd.).

### (Comparative Example 3)

The conductive material dispersed paste 1 obtained by performing operations similar to example 1 was dried for 12 hours at 100°C using a commercially available hot air dryer, the obtained dried body was pulverized using a commercially available cutter mixer, and then conductive material composite particles 7 having sieved particle sizes of 45 µm or less were obtained by performing classification using an electromagnetic sieve shaker (manufactured by Fritsch Japan Co., Ltd.).

### (Comparative Example 4)

Commercially available acetylene black (manufactured by Denka Company Limited, "Denka Black granules") was used as a conductive material raw body 1. Note that the acetylene black is of the same type as the acetylene black used as the conductive material in the examples and comparative examples.

### (Physical Property Measurement and Performance Evaluation)

Physical properties and performance evaluation were performed on each of the dispersed pastes, conductive material composite particles, and conductive material raw body prepared by the methods disclosed in the examples and comparative examples above using the following operations.

The DBP oil absorption of acetylene black used as a conductive material in each example and comparative example was measured by a method in accordance with JIS 6217-4. The measured value was 360 ml/100 g.

The viscosity of the conductive material dispersed pastes 1 and 2 was measured using a B-type viscometer (manufactured by Toki Sangyo, TVB10M viscometer).

The moisture content of the conductive material composite particles 1, 2, 3, 4, 5, 6, 7 and the conductive material raw body 1 was measured using a halogen lamp heating moisture meter (manufactured by Shinko Denshi Co., Ltd., MA-120).

Using a scanning electron microscope (manufactured by Hitachi High-Technologies Corporation, FlexSEM 1000) and AZtec (made by Oxford Instruments, particle analysis software), the particle size upper limit, average particle size, particle size lower limit, particle size distribution D10, D50, D90, D95, and aspect ratio for the conductive material composite particles 1, 2, 3, 4, 5, 6, and 7 were measured and calculated. Furthermore, angle of repose was measured in accordance with JIS 9301-2-:2: 1999. The measurement results are shown in Table 1.

Arithmetic mean roughness was measured for the conductive material composite particles 1, 2, 3, 4, 5, 6, 7 and the conductive material raw body 1 by the following method. A paste was produced by weighing and mixing into a solution where a commercially available polyvinylidene fluoride (manufactured by Kureha Corporation, "KF Polymer-W#7200") that is a binder was diluted to 8.0% by N-methyl-2-pyrrolidone that is a solvent so that the conductive material composite particles or conductive material raw body became 8.3% of the overall amount, and then kneading for 1 minute at 2,000 rpm using a THINKYMIXER (manufactured by Thinky Corporation, Awatori Rentaro). The paste was coated onto a glass plate using an applicator so that the film thickness after drying was 7.5 to 8.5 µm, and then dried for 30 minutes using a hot air dryer at 100°C to obtain a coating from which the solvent has been removed.

The obtained coating here is a "coating for dispersibility evaluation". The arithmetic mean roughness (Ra) and arithmetic mean height (Sa) for this coating for dispersibility evaluation was measured and calculated using a contact type surface roughness meter (manufactured by Tokyo Seimitsu Co., Ltd., Surfcom 130A).

Furthermore, the OD value of the coating for dispersibility evaluation was measured using a spectral density meter (manufactured by Videojet X-Rite K.K, x-rite).

For the conductive material composite particles 1, 2, 3, 4, 5, 6, 7 and the conductive material raw body 1 (call this A), HED NCM 111 1100 (manufactured by BASF Toda Battery Materials, LLC), a composition of LiNi_{1/3}Co_{1/3}Mn_{1/3}O₂, as a commercially available active material (call this B) and PVdF (manufactured by Solvay Japan Solef 5130) as a binder (call this C) were measured such that a weight ratio of respective solid contents was 2 parts by weight of A, 97 parts by weight of B, and 1 part by weight of C, this was diluted by NMP such that the sum of the solid contents of A, B, and C was 65 mass%, then this was kneaded for 2 minutes at 2,000 rpm using a THINKYMIXER to obtain an "electrode paste for evaluation A". Furthermore, other than changing the kneading time by THINKYMIXER to 10 minutes, an "electrode paste for evaluation B" was obtained in the same way as the paste for coating evaluation A.

Note that for the conductive material composite particles 1, 2, 3, 4, 5, 6, and 7, because the dispersant contained in the composite particles acts as the binder on the electrode coating, here, the dispersant amount was considered to be the binder amount, and in calculation of the blending ratio, the dispersant amount included in the conductive material composite particles was divided from A, and after this dispersant amount was added to C, the conductive material composite particles, active material, and binder were weighed such that A, B, and C were respectively 2 parts by weight, 97 parts by weight, and 1 part by weight.

After applying the above electrode paste for evaluation A and electrode paste for evaluation B onto a PET film using an applicator, this was dried for 30 minutes at 100°C using a hot air dryer, and NMP was removed to obtain a coating having a film thickness within a range of 100 µm to 120 µm. The coatings obtained here are "coating for electrode paste evaluation A" and "coating for electrode paste evaluation B", respectively.

Of these, a cross section of the coating for electrode paste evaluation A was exposed using a cross section cutter for SEM sample production, and a dispersed state of the conductive material in the coating was photographed at a magnification of 500 times using a scanning electron microscope (manufactured by Hitachi High-Technologies Corporation, FlexSEM 1000) and an energy dispersion type X-ray spectrometer (manufactured by Oxford Instruments, AZtecEnergy x-act).

Furthermore, coating resistance was measured by the following method using both coatings for electrode paste evaluation A and B.

First, the coating was cut out to a width of 2 cm and a length of 3 cm, and the volume resistivity of the coating was measured at an applied voltage of 10 V using a resistivity meter (manufactured by Nittoseiko Analytech Co., Ltd., Loresta-GP MCP-T610).

The results of each measurement test above are shown in Table 1.

### (Battery Performance Evaluation)

Next, using the conductive material composite particles 1, 2, 3, 4, 5, 6, 7, the conductive material raw body 1, and each of the following materials, a CR2032 type (diameter 20 mm, height 3.2 mm) coin-type rechargeable battery was produced by the following method, and the performance thereof was evaluated.

Note that the rechargeable battery disclosed below and the production method thereof are merely one example for evaluating the conductive material composite particles of the present invention, and do not limit a usage method or embodiment of the conductive material composite particles of the present invention in any way. The conductive material composite particles of the present invention are not limited to the materials, battery manufacturing methods, battery shapes, and other conditions disclosed below, and may be suitably used as electrode materials for a wide range of electricity storage devices such as lithium ion rechargeable batteries.

### [Production of the Positive Electrode of Example 1]

A positive electrode active material (HED NCM 111 1100 manufactured by BASF Toda Battery Materials, LLC, theoretical capacity: 160 mAh/g), a binder (PVdF (manufactured by Solvay Japan, Solef 5130)) and a conductive material (conductive material composite particles 1) were weighed at a ratio of 97:1:2 (weight ratio), the positive electrode active material and the conductive material were mixed into a solution of the binder dissolved in a solvent (N-methyl-2 pyrrolidone), and this was diluted by the solvent so that the solid content of the coating liquid was 70 to 75 wt% and made into an electrode paste. This electrode paste was coated on a 20 µm thick aluminum foil so that the areal capacity (battery capacity per unit area) was 3.0 to 4.0 mAh/cm² and dried in a 100°C oven for 30 minutes to obtain a positive electrode coating plate. In the positive electrode coating plate obtained here, a portion where the electrode paste is dried and film-formed on the aluminum foil that is the current collector is made to be a "positive electrode composite material layer". After the positive electrode coating plate was pressed so that the electrode density (mass of positive electrode composite material layer/volume of positive electrode composite material layer) was 2.9 to 3.4 g/cm³, this was die cut to Φ14 mm by a coin-type die cutter to make a positive electrode.

Note that, when calculating the electrode density, the mass of the positive electrode composite material layer was found by subtracting the mass of the aluminum foil from the mass of the positive electrode coating plate, and the volume of the positive electrode composite material layer was found by making the height to be the thickness of the aluminum foil subtracted from the thickness of the positive electrode coating plate, then making Φ14 mm the base area.

### [Production and Evaluation of the Battery for Evaluation of Example 1]

A separator ("Seillon P2010", material; polypropylene, Φ17 mm, manufactured by CS Tech) was inserted between the positive electrode obtained as described above and a negative electrode (lithium foil, 200 µm thickness, Φ16 mm, manufactured by Honjo Metal), and a CR2032 coin cell filled with an electrolyte (1.0 M LiPF6 EC: DEC (1:1 v/v%), manufactured by Kishida Chemical) was assembled to produce a battery for evaluation.

The obtained evaluation battery was measured for charge and discharge and actual discharge capacity as follows using a charge and discharge tester (580-type high performance charge and discharge system manufactured by Scribner Associates).

For charge and discharge, the battery was fully charged by a constant current and constant voltage charge of 1 C at room temperature (25°C) at a maximum voltage of 4.3 V, and then discharged to 3.0 V at a constant current of 1 C. This was called 1 cycle, a total of 30 cycles was performed, and actual discharge capacity was measured for the 30^{th} cycle. Note that a 10 minute pause time was provided from fill charge completion until discharge start in each cycle as well as between each cycle. Based on the obtained actual discharge capacity (mAh), the initial effective capacity, the effective capacity in the 30^{th} cycle, and the capacity retention rate were determined. The results thereof are shown in Table 1.

Here, the effective capacity refers to a ratio of the actual discharge capacity when the theoretical capacity (mass (g) of the positive electrode composite material layer × active material blending ratio × theoretical capacity of the active material per 1 g) is 100%. Furthermore, the effective capacity of the first cycle was set as the initial effective capacity.

Furthermore, the capacity retention rate is a value indicating a ratio of the effective capacity in the 30th cycle where the initial effective capacity is 100%.

### (Battery Production and Battery Evaluation for Examples 2 to 4 and Comparative Examples 1 to 4)

The conductive material was changed to the composite particles and conductive material raw body shown in Table 1, and other than this, batteries were produced in the same way as in example 1, and the performance thereof was evaluated. The results are shown in Table 1.

### [Table 1]

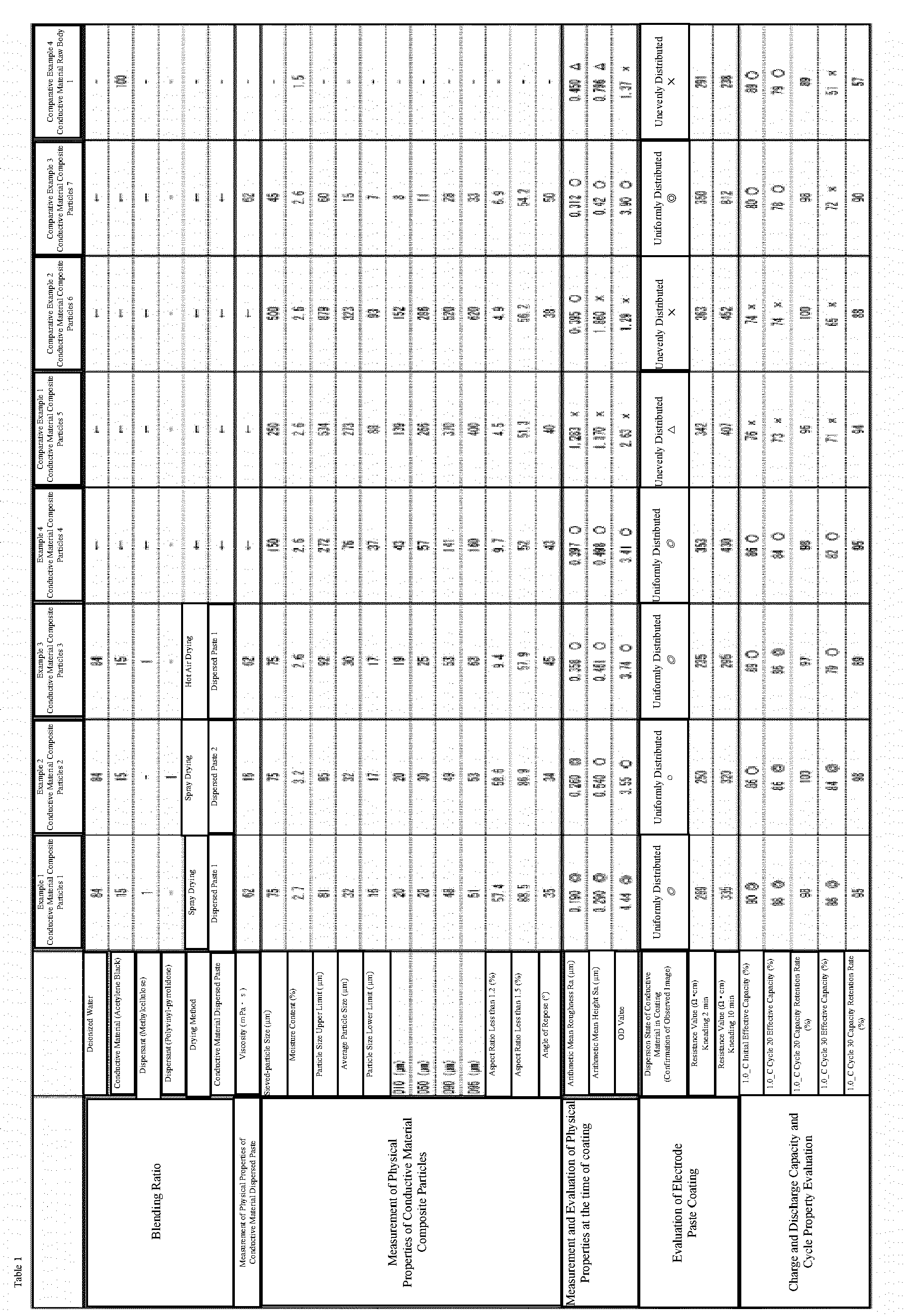

From the results shown in Table 1, the conductive material composite particles of the examples had an OD value of 3.0 or greater after being made a coating, and it is shown that the conductive material is uniformly dispersed in the coating. In particular, example 1 shows that the optical density of the coating exceeds 4.0, and uniformity is extremely superior.

When comparing examples 3 and 4 and comparative examples 1 and 2 where only the particle size upper limit are different, the optical density is reduced in the comparative examples where the particle size of the composite particles is large, and a reduction in uniformity is shown. Furthermore, comparative examples 1 and 2 have roughened surfaces compared to the examples, and it is shown that there are many coarse particles in the coating.

Comparative example 4 has a low OD value and the surface roughness of the coating was also unfavorable.

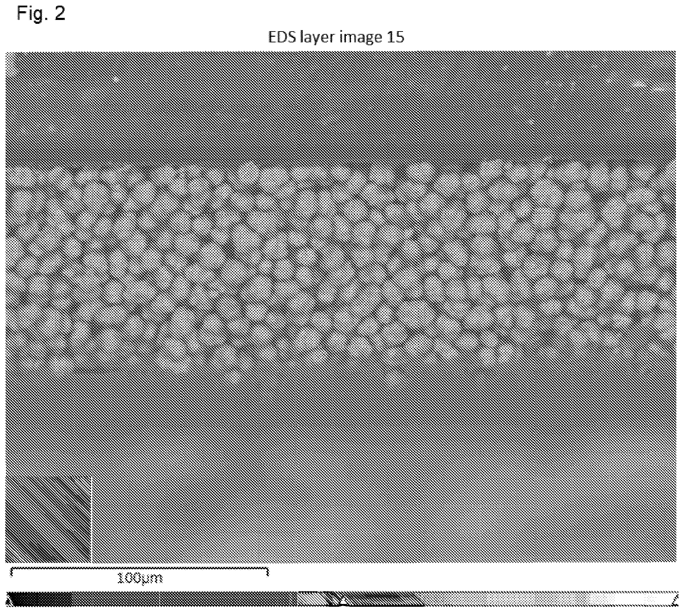

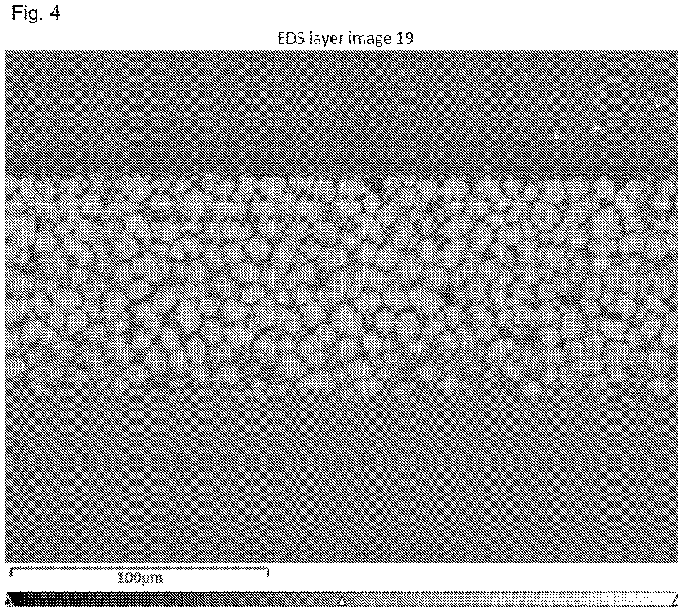

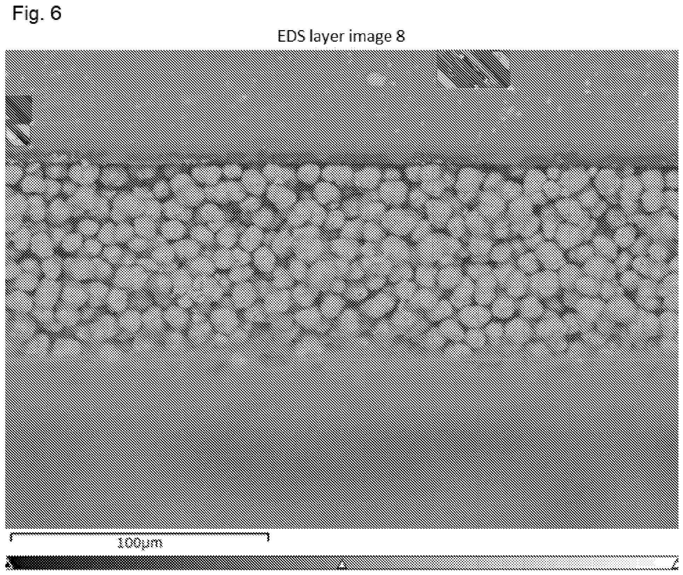

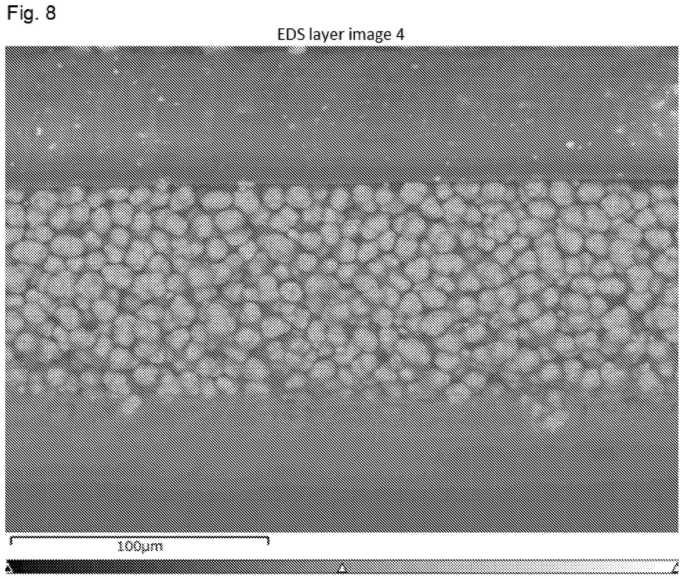

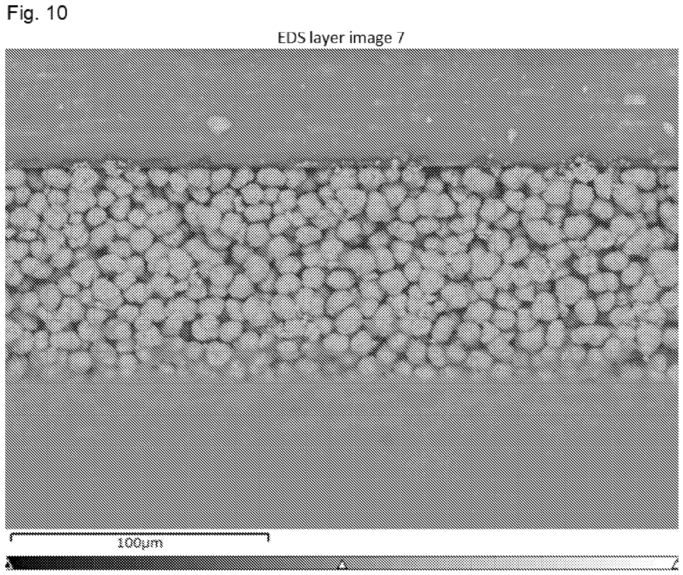

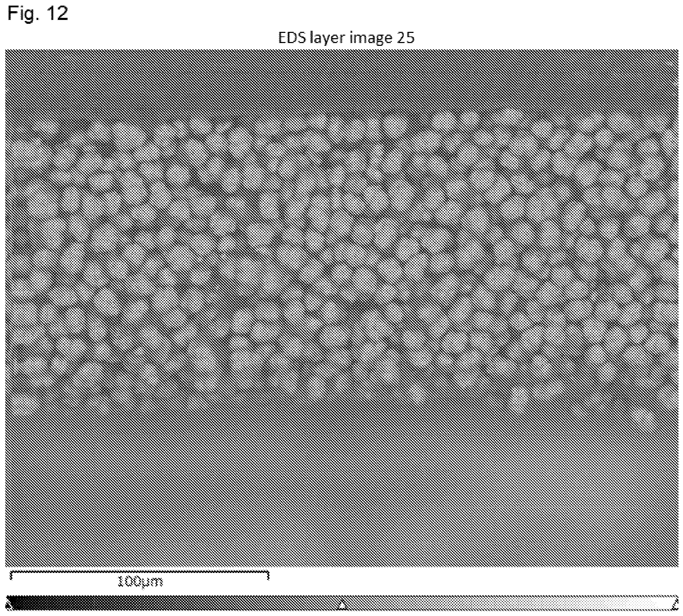

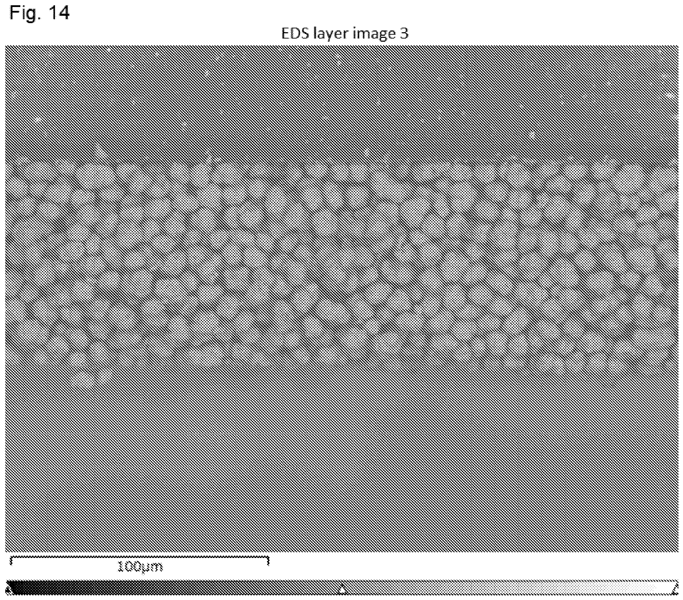

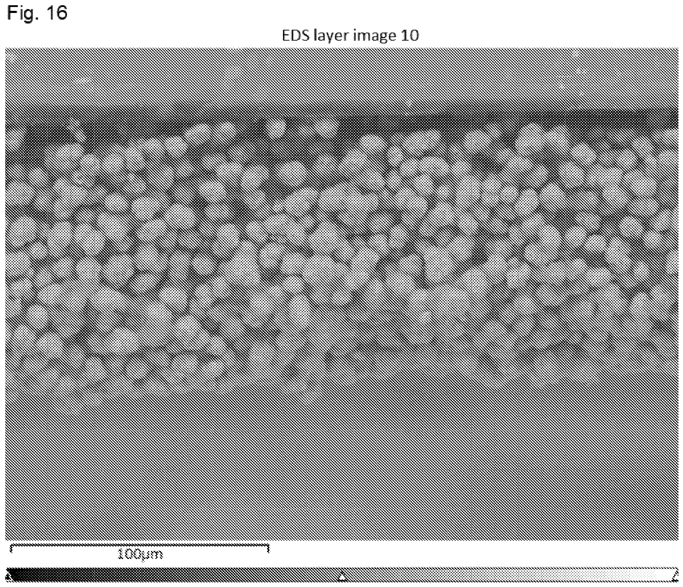

In the SEM observation images of FIG. 2, FIG. 4, FIG. 6, FIG. 8, FIG. 10, FIG. 12, FIG. 14, and FIG. 16, the white spherical substance is the active material, and the gray haze adhering to the periphery thereof illustrates the conductive material.

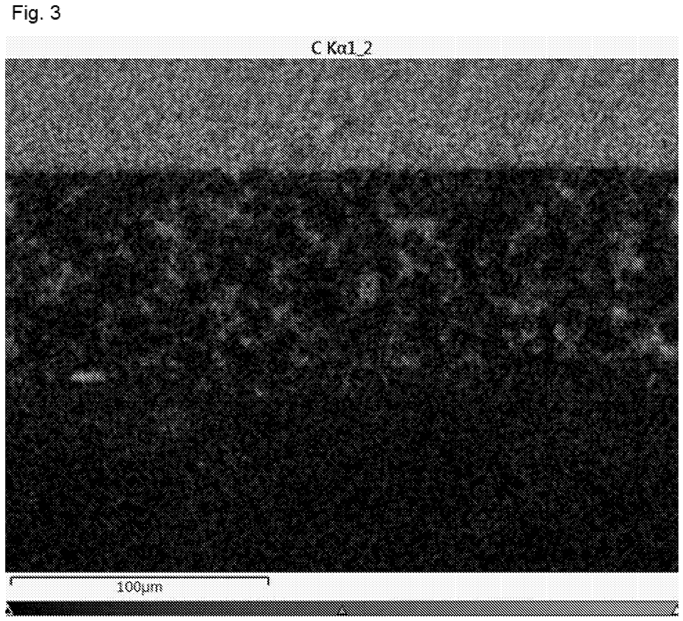

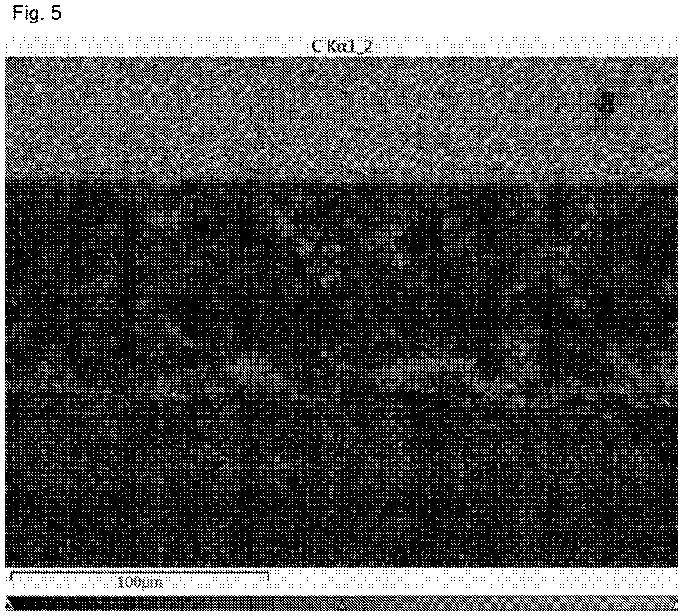

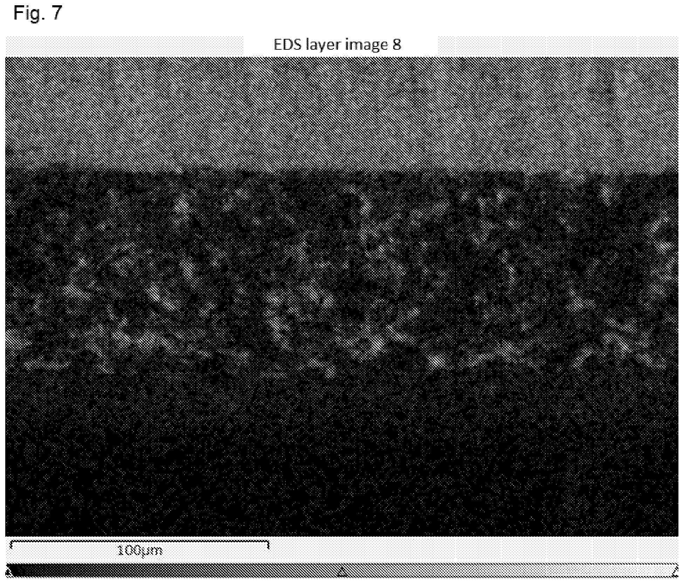

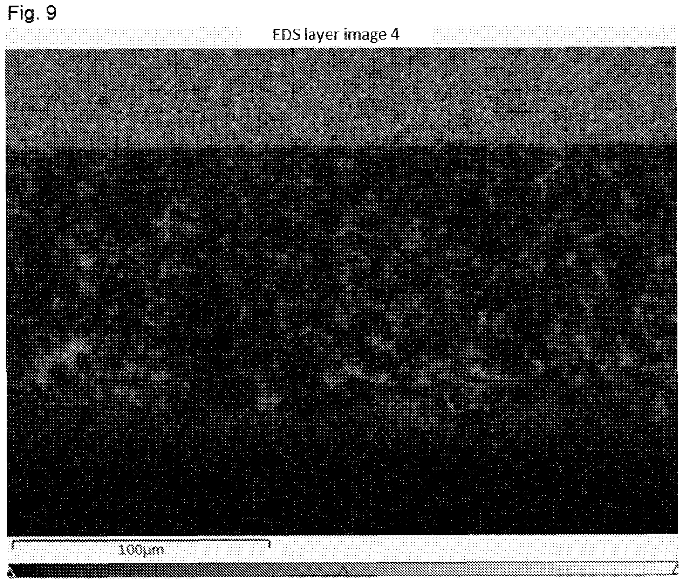

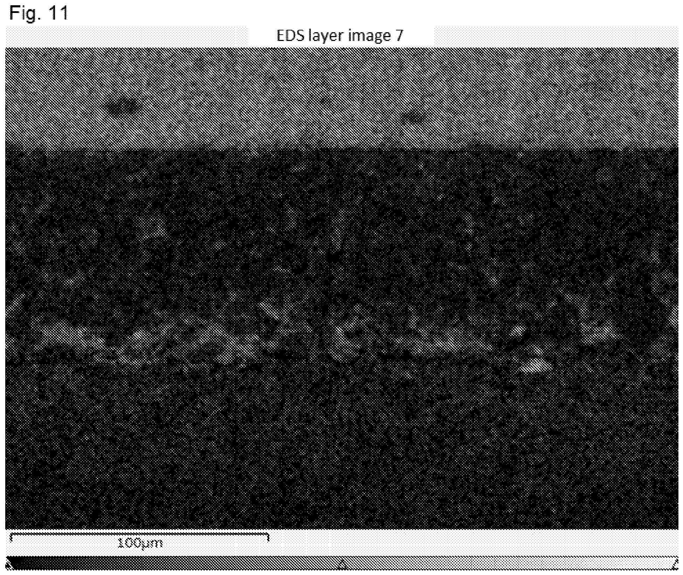

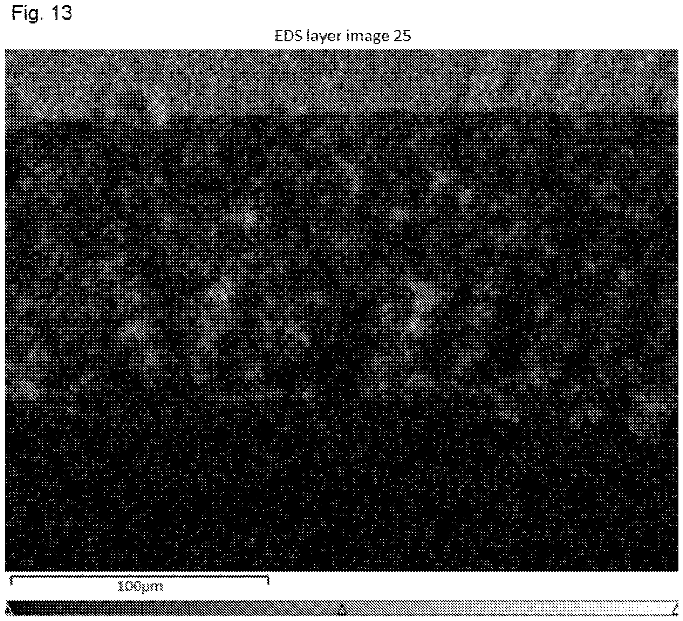

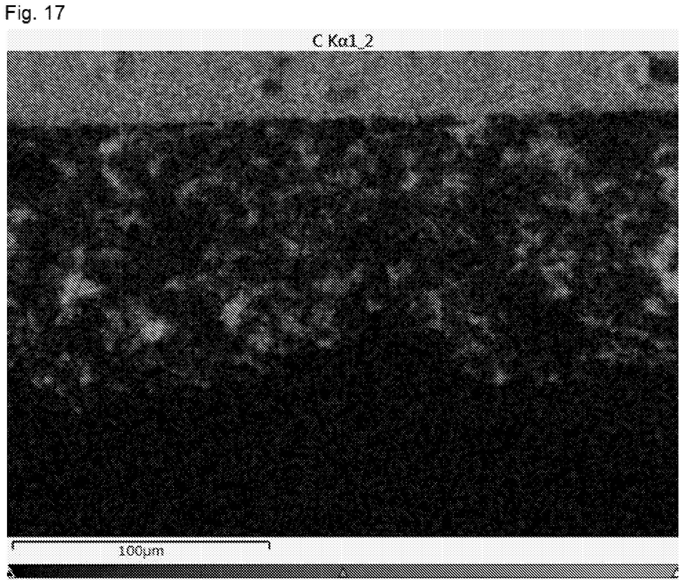

In the EDS analysis images of FIG. 3, FIG. 5, FIG. 7, FIG. 9, FIG. 11, FIG. 13, FIG. 15, and FIG. 17, carbon, which is the conductive material, is visible in white.

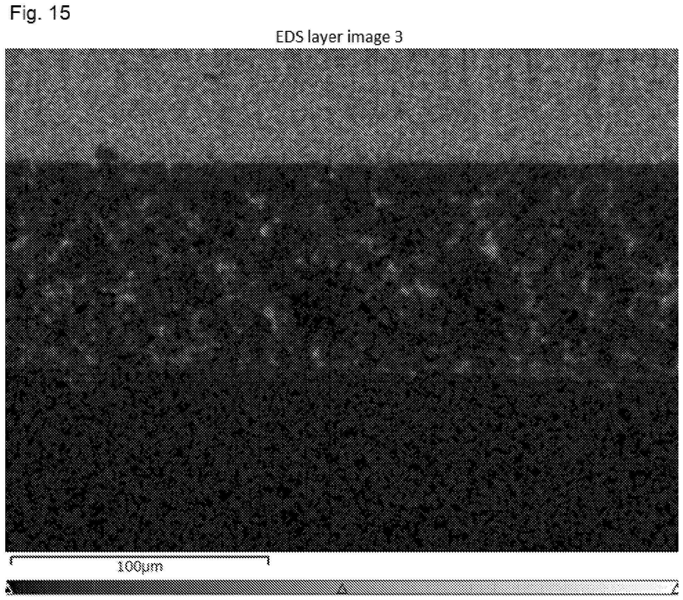

From these diagrams, it is found that while the examples thoroughly uniformly distributed the conductive material between the active materials, in the comparative examples, there are locations where there is a concentration or where there is very little, and that these are unevenly distributed within the coating. Furthermore, it is found that coarse particles or cohesion (white lumps in the image) are present in the EDS analysis images of comparative examples 1, 2, and 4. In FIG. 15, no large lumps can be confirmed, but a white haze can hardly be seen. It is thought that this indicates that the secondary agglomerates were excessively loosened and the bonds between the structures were cut during the paste kneading process. In such a state, a conduction path is not easily formed and high battery performance cannot be exhibited.

It is understood that by using the composite particles produced as in the present invention in this manner, an electrode coating can be obtained that has favorable dispersibility compared to comparative examples and in which the conductive material is uniformly dispersed.

The evaluation of the volume resistance indicated that the electrode coatings using the conductive material composite particles of each example had a generally low resistance compared to the comparative examples. With comparative example 3, when the kneading time at the time of making the paste is 2 minutes, the resistance is low to a certain extent, but when it is 10 minutes, the resistance is greatly increased. This is thought to be because, compared to the examples, there are many small composite particles, and therefore, it is easy for the bonds between the structures to be cut by kneading and it is difficult for a conduction path to form.

In the evaluation of battery performance, the batteries using the conductive material composite particles of each example demonstrate high battery performance. Comparative examples 1, 2, and 3 had low effective capacity and capacity retention rates. Furthermore, with comparative example 4, the capacity retention rate in the 30th cycle was significantly reduced.

As described above, the electrode coating using the conductive material composite particles of the present invention shown in the examples has the conductive material uniformly dispersed between the active materials in the coating, may impart sufficient electron conductivity to many active materials, and may improve the charge and discharge capacity when made into a battery. Furthermore, since uneven distribution and cohesion of the conductive material do not occur and coarse particles and foreign matter are not present, there is a low possibility that localized energization and short-circuiting will occur, causing thermal runaway of the battery and early reduction in charge and discharge capacity compared to conventional art, and battery performance may be maintained over a long period of time.

### Industrial Applicability

By using the conductive material composite particles of the present invention, high-quality positive and negative electrodes can be produced that realize an improvement in the performance of a lithium ion rechargeable battery. The lithium ion rechargeable battery using the present invention can be suitably used as a power source for an electric motor (motor) mounted in an electric vehicle or the like. The conductive material composite particles of the present invention can be stored at room temperature for a long period of time, and in addition, the amount of solvent used during manufacture is suppressed, and the impact on the environment and the production cost can be reduced.

Furthermore, by using the conductive material composite particles of the present invention as an alternative to existing conductive materials such as carbon black and the like, performance can be improved and costs can be reduced even when used in other electricity storage devices and not limited to lithium ion rechargeable batteries.

## Claims

1. Conductive material composite particles containing at least a conductive material and a dispersant, wherein the particles have a particle size distribution D50 of 15 µm or more and a sieved particle size of 150 µm or less, a DBP oil absorption of the conductive material is 550 ml/100 g or less, and the dispersant is included at 1 to 10 parts by weight to 100 parts by weight of the conductive material.

2. Conductive material composite particles containing at least a conductive material and a dispersant, wherein the particles have a particle size distribution D50 of 15 µm or more and a particle size upper limit of 300 µm or less, a DBP oil absorption of the conductive material is 550 ml/100 g or less, and the dispersant is included at 1 to 10 parts by weight to 100 parts by weight of the conductive material.

3. The conductive material composite particles according to any one of claims 1 and 2, wherein the particles contain at least a conductive material and a dispersant.

4. The conductive material composite particles according to claim 1 or 2, wherein the dispersant is a nonionic dispersant.

5. The conductive material composite particles according to claim 4, wherein the weight average molecular weight of the nonionic dispersant is 1,000 or more and 1,000,000 or less.

6. The conductive material composite particles according to claim 1 or 2, wherein a purity of the conductive material is 99.9% or more.

7. The conductive material composite particles according to claim 1 or 2, wherein an average primary particle size of the conductive material is 10 nm or more and 50 nm or less.

8. The conductive material composite particles according to claim 1 or 2, wherein the conductive material is for a battery electrode.

9. A method for manufacturing conductive material composite particles, comprising: a step for producing a conductive material dispersed paste containing at least a conductive material, a dispersant, and a dispersion medium; and a step for removing the dispersion medium of the conductive material dispersed paste, wherein a particle size of the conductive material composite particles in the conductive material dispersed paste is 50 µm or less.

10. The method for manufacturing conductive material composite particles according to claim 9, wherein the conductive material dispersed paste does not include foreign matter exceeding 50 µm.

11. The method for manufacturing conductive material composite particles according to claim 9 or 10, further comprising a drying step for heating the conductive material dispersed paste at 80°C or more and 300°C or less.

12. A method for manufacturing an electrode, comprising mixing the conductive material composite particles according to claim 1 or 2 with at least an active material and a binder, then coating on a substrate.

13. A method for manufacturing an electrode, comprising mixing the conductive material composite particles obtained by the manufacturing method according to claim 9 or 10 with at least an active material and a binder, then coating on a substrate.

14. A lithium ion rechargeable battery that uses the electrode obtained by the method according to claim 12.

15. An electricity storage device that uses the conductive material composite particles according to claim 1 or 2.

16. An electricity storage device that uses the electrode obtained by the method according to claim 12.
